# FASCICULE DE BREVET EUROPEEN

(11) **EP 1 179 113 B1**
(45) Date de publication et mention de la délivrance du brevet: **23.07.2003**
(21) Numéro de dépôt: 00929529.6
(22) Date de dépôt: 15.05.2000
(51) Int. Cl.: E06B 5/16, E06B 3/663, B32B 17/10, C08L 23/22

(54) **COMPOSITION DE MASTIC, APPLICATION ET UTILISATION DU MASTIC, VITRAGE DE PROTECTION CONTRE LE FEU, PROCEDE DE FABRICATION DU VITRAGE**
MASTIX MISCHUNG, ANWENDUNG UND VERWENDUNG DER MASTIX MISCHUNG, BRANDSCHUTZVERGLASUNG, HERSTELLUNGSVERFAHREN DER BRANSCHUTZVERGLASUNG
MASTIC COMPOSITION, APPLICATION AND UTILISATION OF THE MASTIC, FIRE PROTECTION GLAZING, METHOD FOR PRODUCING THE GLAZING

(30) Priorité: 15.05.1999 DE 19922507
(43) Date de publication de la demande: 13.02.2002
(73) Titulaire: Vetrotech Saint-Gobain (International) AG, 3014 Bern (CH)
(72) Inventeur: GELDERIE, Udo, D-52222 Stolberg (DE); FROMMELT, Simon, D-42781 Haan (DE)
(74) Mandataire: Muller, René
(86) Numéro de dépôt international: EP0004350
(87) Numéro de publication internationale: WO00070181

(56) Documents cités:
- EP-A- 0 457 554
- EP-A- 0 811 656
- DE-A- 2 555 383
- FR-A- 2 294 313
- FR-A- 2 726 316
- GB-A- 2 023 452
- US-A- 4 215 164

## Description

L'invention se rapporte à une composition de mastic susceptible d'être utilisée pour former une entretoise collée. L'invention se rapporte aussi à un vitrage de protection contre le feu fait d'au moins deux vitres reliées ensemble à l'aide d'une entretoise collée aux vitres et d'une couche intermédiaire contenant de l'eau, remplissant l'espace intermédiaire entre les vitres.

On connaît des vitres de protection contre le feu de ce genre par exemple à partir du document EP 0 590 978 A1. Dans le cas de ces vitres de protection contre le feu connues, l'entretoise se compose d'un matériau rigide, à savoir en métal ou en céramique, et le collage de l'entretoise sur les vitres se fait à l'aide de bandes adhésives en caoutchouc synthétique, en particulier en caoutchouc butylique. En outre le joint marginal entre l'entretoise et les bords des vitres est rendu étanche grâce à une masse adhésive d'étanchéité.

On connaît également, à partir du document Pat. Abstr. of Japan, C 1187, 7 avril, 1994, volume 18, n° 198, des vitres de protection contre le feu ayant la structure citée plus haut. Dans le cas de ces vitres de protection contre le feu, on se sert, en tant qu'entretoise, d'un ruban profilé en polymère acrylique. Le ruban profilé est pourvu, sur les côtés s'appuyant sur les vitres, à chaque fois d'une couche adhésive à base de résine acrylique. Les polymères acryliques possèdent une température de ramollissement relativement faible et également une température de décomposition relativement faible. En cas d'incendie, ils forment des gaz désagréables et gênants.

Lors de la fabrication des vitres de protection contre le feu connus, la disposition des tronçons profilés ou des rubans profilés formant l'entretoise demande un travail manuel considérable. C'est pourquoi il existe un vif intérêt relatif à l'utilisation de procédés connus (par exemple voir le document DE 2555383 C3) pour la fabrication de vitres isolantes, en vue de la fabrication du vitrage de protection contre le feu cité précédemment, lors duquel l'on procède à l'application de l'entretoise par extrusion sous la forme d'un cordon de matériau continu sur la zone marginale d'une vitre, à l'aide d'un dispositif d'extrusion approprié. Il s'est cependant avéré en l'occurrence que les matériaux connus ne sont pas appropriés à la présente application.

Les vitres de protection contre le feu du genre précité se composent fréquemment de trois à cinq vitres et, de manière correspondante, de deux à quatre espaces intermédiaires, à chaque fois avec un cadre d'entretoise d'écartement et un remplissage contenant de l'eau. Lors de la fabrication de vitres de protection contre le feu à couches multiples de ce genre, on met en place, à chaque fois après l'application d'un cadre d'entretoise d'écartement, la vitre suivante, et, à l'aide d'une presse mécanique, on comprime le paquet de couches à l'épaisseur de consigne souhaitée de l'espace intermédiaire. Cette épaisseur de consigne de l'espace intermédiaire ne doit pas se modifier quand, après l'application de l'entretoise suivante, l'on soumet le paquet de couches à une nouvelle procédure de compression, pour comprimer l'espace intermédiaire suivant à l'épaisseur de consigne souhaitée. Les entretoises d'écartement doivent, de surcroît, préserver leur stabilité et leur fonction même en cas d'incendie. On demande, par conséquent, aux propriétés physiques et chimiques d'un matériau thermoplastique destiné aux entretoises d'écartement de remplir des exigences diverses, qui ne sont pas satisfaites par les matériaux connus pour des applications similaires.

L'objet fondamental de l'invention est de développer et de mettre à disposition des compositions de matériau, qui satisfont aux exigences spéciales relatives à la fabrication par machine de vitres de protection contre le feu du genre précité. Ces matériaux doivent, en particulier, d'une part pouvoir être extrudés à l'aide de machines commerciales et permettre la déformation plastique nécessaire lors de la procédure de compression suivante. Ils doivent. cependant, d'autre part présenter une solidité et une stabilité internes suffisantes et ne doivent plus modifier, après la première procédure de compression, lors des procédures de compression suivantes, la dimension de section transversale à laquelle ils sont déjà parvenus.

Conformément à l'invention, cet objet est résolu en ce que l'entretoise se compose d'un cordon, appliqué par extrusion sur la zone marginale d'une vitre, fait d'un polymère de butyle contenant de 40 à 65% en poids de polyisobutylène. de 10 à 25% en poids de noir de fumée et de 10 à 40% en poids d'une charge, et en ce que la composition est choisie au sein de ce domaine de telle sorte que le polymère de butyle présente à une température de 80°C un module d'élasticité transversale ou de cisaillement G^{*} de 1,2 à 2,2 MPa.

Avantageusement, l'entretoise se compose d'un polymère de butyle qui contient de 50 à 60% en poids de polyisobutylène, de 12 à 18% en poids de noir de fumée et de 25 à 35% en poids de charge et qui présente à 80°C un module d'élasticité transversale ou de cisaillement G^{*} de 1,8 MPa.

Sont appropriés en tant que charges des substances qui ne contiennent pas de portions d'air incluses. Il s'est en effet avéré qu'après le remplissage de la masse de coulée contenant de l'eau, de l'air adsorbé dans les charges peut s'échapper dans les espaces intermédiaires lors du processus de durcissement subséquent et y former des bulles d'air gênantes. En outre, la désorption d'air ou autre gaz libère en surface ou dans les pores des emplacements susceptibles de reprendre une partie substantielle de l'eau de la couche intermédiaire qui perd ses propriétés de protection anti-feu.

Suivant une variante avantageuse, la charge comprend au moins une substance subissant une réaction endothermique lorsqu'elle est portée à une température d'au moins 180°C. Ainsi, la charge exerce un effet refroidissant sur l'entretoise, ce qui influence favorablement la résistance au feu. En fait, une température de réaction endothermique à partir de 130 ou 150°C serait aussi avantageuse, mais incompatible avec les températures de fabrication et de mise en oeuvre du caoutchouc butyle.

De préférence, cette réaction endothermique consiste en la libération d'eau d'hydratation ou de cristallisation.

Avantageusement, la réaction ne libère, en dehors de l'eau, pas de substance gazeuse à la température de réaction.

La charge peut être choisie parmi des substances inorganiques, organiques ou leurs mélanges.

Entrent en ligne de compte, en tant que charges inorganiques, des oxydes, des hydroxydes, des sels de sulfates, sulfites, phosphates, hydrogénophosphates, phosphites, hypophosphites, silicates, nitrates, nitrites, carbonates. Par exemple, on peut citer MgO, CaSO₄ notamment hydraté tel que CaSO₄•2H₂O, MgSO₄ notamment hydraté tel que MgSO₄•7H₂O, sulfate de fer II ou III notamment hydraté tel que Fe₂(SO₄)₃•9H₂O, sulfite de sodium notamment hydraté tel que Na₂SO₃•7H₂O, CaCO₃, MgCO₃, K₂CO₃ notamment hydraté tel que K₂CO₃•2H₂O, des silicates, Al(OH)₃ , MgOH₂, Al₂O₃, des phosphates d'aluminium ou de magnésium notamment Mg(H₂PO₄)₂•8H₂O, sels d'acide phosphoreux dérivés notamment de manganèse notamment hydraté tel que MnHPO₃•H₂O, l'hypophosphite de manganèse notamment hydraté tel que Mn(H₂PO₂)₂•H₂O, CeNO₃, notamment hydraté tel que CeNO₃•3H₂O, ou d'autres substances inorganiques ayant les propriétés citées.

En tant que charge organique, entrent en ligne de compte des sels d'acides organiques, tels que des citrates, notamment citrate de sodium pentahydraté, des tartrates, notamment tartrate de sodium dihydraté, des mésotartrates, notamment mésotatrate de calcium trihydraté, des glyconates, notamment d-glyconate de calcium monohydraté.

Les compositions spéciales selon l'invention sont à choisir, au sein des domaines indiqués ci-dessus de la composition chimique des constituants principaux du polymère de butyle, de telle sorte que le module d'élasticité transversale du matériau se situe à une température de 80°C dans le domaine allant de 1,2 à 2,2 MPa. C'est seulement quand cette condition est remplie que le matériau peut être, d'une part, extrudé à l'aide d'un équipement d'extrusion usuel et qu'il possède, d'autre part, une consistance et une solidité et une capacité de déformation telles qu'il puisse être comprimé à la taille de consigne de l'entretoise sans difficulté lors de la première procédure de compression, tout en ne modifiant plus ses dimensions de consigne lors de procédures de compression ultérieures.

Pour les raisons exposées, à savoir, d'une part, pour des raisons de capacité de mise en oeuvre à l'aide d'un équipement d'extrusion et, d'autre part, à cause de la faible capacité de déformation requise après obtention de la géométrie finale, le matériau doit présenter des proportions de déformation élastique et plastique dans des rapports tout à fait déterminés, ce qui peut être défini en tant que constante de matériau par le module d'élasticité transversale ou de cisaillement G^{*}. Le module d'élasticité transversale G^{*}, qui représente une mesure des propriétés viscoélastiques d'un élastomère, est traité, dans le cas de mesures mécaniques dynamiques, conformément à l'équation G* = G' + iG" en tant que grandeur complexe, G^{*} désignant ce que l'on appelle le "module de mémoire" en vue de la caractérisation de la proportion de déformation élastique et G" ce que l'on appelle le "module de perte" en vue de la caractérisation de la proportion de déformation plastique.

La détermination du module d'élasticité transversale G^{*} se fait à l'aide d'un système de mesure oscillant, par exemple à l'aide de deux cylindres coaxiaux, qui contiennent, dans le passage annulaire entre le cylindre externe et le cylindre interne, le matériau à déterminer. On applique à l'un des deux cylindres en l'occurrence un mouvement d'oscillation variable en fréquence et en amplitude. Le mouvement d'oscillation transmis à l'autre cylindre a certes la même fréquence, mais manifeste cependant, en fonction des propriétés viscoélastiques du matériau à déterminer, une autre amplitude et présente, par rapport à l'oscillation du cylindre entraîné, un décalage de phase plus ou moins important. On peut déterminer le module d'élasticité transversale G' par un traitement mathématique correspondant des signaux d'entrée et de sortie du dispositif de mesure.

Les polymères de butyle thermoplastiques, appropriés à l'application selon l'invention, possèdent en fonction de la température les propriétés rhéologiques suivantes:

| Température | Module d'élasticité transversale G* [MPa] | Module de mémoire G' [MPa] | Module de perte G" [MPa] |
|---|---|---|---|
| 30°C | 2,7 - 5,0 | 2,5 - 4,5 | 1,0 - 1,5 |
| 50°C | 1,8 - 3,0 | 1,6 - 2,5 | 0,7 - 1,1 |
| 70°C | 1,4 - 2,4 | 1,2 - 2,0 | 0,6 - 0,9 |
| 80°C | 1,2 - 2,2 | 1,1 - 1,9 | 0,6 - 0,9 |

L'invention a également pour objet une composition de mastic à base de caoutchouc butyle telle que décrite précédemment.

Cette composition est utilisable, notamment pour réaliser des entretoises ou cadres dans des vitrages multiples remplis ou non d'une couche intermédiaire. qui peut être un gel aqueux pour fabriquer un vitrage anti-feu, mais aussi une résine pour fabriquer une cellule solaire, ou dans des vitrages feuilletés incluant un intercalaire plastique, notamment en polyvinylbutyral (PVB).

Elle est aussi utilisable pour le scellement, jointoiement, ou le montage de plaques de verre et matériaux divers, éventuellement en association avec un matériau usuel tel que du polysulfide.

L'invention est décrite plus en détail dans la suite par référence à deux exemples de réalisation en vue de la fabrication de vitres de protection contre le feu à couches multiples ayant des couches intermédiaires contenant de l'eau et des cadres d'écartement appliqués par extrusion à partir d'un polymère de butyle thermoplastique.

### EXEMPLE 1

On fabrique une vitre de protection contre le feu de la classe de résistance au feu F 90 conformément à la norme DIN 4102. Cette vitre de protection contre le feu se compose de quatre feuilles de verre au silicate de la même taille, à chaque fois d'une épaisseur de 5 mm, en verre flotté à précontrainte thermique, qui sont reliées entre elles à chaque fois par des cadres d'écartement d'une épaisseur de 5 mm, en polymère de butyle selon l'invention. Les espaces intermédiaires définis entre les vitres et les cadres d'écartement sont remplis d'un polysilicate alcalin contenant de l'eau.

Après une préparation préalable des vitres, on procède, sur le bord d'une vitre, à l'application par extrusion d'un cordon d'environ 6 mm d'épaisseur d'un polymère de butyle selon l'invention à l'aide d'un dispositif d'extrusion présentant une buse d'extrusion calibrée. Les équipements et les conduites du dispositif d'extrusion contenant et transportant le polymère de butyle ainsi que la buse d'extrusion elle-même sont pourvus d'équipements de chauffage régulés de telle manière que le cordon de butyle soit déposé à une température d'environ 135°C sur la vitre. Dès qu'un cadre espaceur clos est appliqué par extrusion, on applique la deuxième vitre sur le cadre espaceur et on comprime les deux vitres, dans une presse à plateaux, jusqu'à l'écartement de consigne des deux vitres, à savoir 5 mm. Pendant cette procédure de compression, le cadre d'écartement en matériau de butyle présente une température d'environ 80°C.

Le polymère de butyle utilisé dans ce cas se compose de 55% en poids de polyisobutylène, de 15% en poids de noir de fumée et de 30% en poids d'oxyde de magnésium. Il présente à 80°C un module d'élasticité transversale de G^{*}=1,29 MPa. Cette valeur, d'après la relation mathématique connue, correspond à un module de mémoire de G'=1,15 MPa et à un module de perte de G"-0,6 MPa, ce qui signifie que la proportion de déformation élastique est, également à la température de 80°C, considérablement supérieure à la proportion de déformation plastique.

Après la compression des deux vitres dans la presse à plateaux jusqu'à l'écartement de consigne, on applique par extrusion à nouveau sur la face extérieure de la deuxième vitre un cadre d'écartement fermé, on place la troisième vitre sur le cadre d'écartement et on répète la procédure de compression pour parvenir à l'écartement de consigne souhaité de la troisième vitre par rapport à la deuxième vitre. Alors que le cadre d'écartement extrudé en dernier lieu présente une température d'environ 80'C et qu'il est déformé de manière plastique de la manière souhaitée lors de la procédure de compression, la température du cadre d'écartement extrudé en premier lieu s'est abaissée à un point tel que celui-ci ne subit, lors de la deuxième procédure de compression. plus aucune déformation plastique. La quatrième vitre est également reliée ensuite d'une manière similaire avec la troisième vitre par l'intermédiaire d'un cadre d'écartement supplémentaire appliqué par extrusion sur la troisième vitre.

Après la dernière procédure de compression, on contrôle les écarts des vitres les unes par rapport aux autres, c'est-à-dire les épaisseurs des espaces intermédiaires. Il s'avère en l'occurrence que l'épaisseur des espaces intermédiaires n'est pas modifiée par les procédures de compression subséquentes.

Les espaces intermédiaires sont ensuite remplis d'un polysilicate alcalin contenant de l'eau, comme il est décrit dans le document WO 94/04355. La masse de coulée de polysilicate alcalin contient de 30 à 55% en poids de dioxyde de silicium, au maximum 16% en poids d'oxyde de métal alcalin et jusqu'à 60% en poids d'eau. En vue de la réalisation des orifices de remplissage et des orifices de ventilation nécessaires, on a appliqué, avant l'application des vitres sur les cadres d'écartement correspondants, au travers des cadres d'écartement à deux coins diagonalement opposés, à chaque fois des tronçons de tige cylindriques courts, qui ont été retirés après la dernière procédure de compression. Après le remplissage de la masse de coulée, on ferme ces orifices. L'ensemble des vitres remplies de masse de coulée est alors soumis pendant une période de 10 heures à une température de 80 à 90°C, au cours de laquelle la masse de coulée se durcit. En vue de l'accélération de la procédure de durcissement, on peut ajouter à la masse de coulée un agent de durcissement supplémentaire.

On a effectué, sur plusieurs vitres de protection contre le feu fabriquées de cette manière, des essais de combustion conformément à la norme DIN 4102, partie 13. Toutes les vitres remplissent les exigences de la classe de protection contre le feu F 90.

### EXEMPLE 2

On fabrique à nouveau des vitres de protection contre le feu à partir de quatre vitres à chaque fois de 5 mm d'épaisseur et de trois espaces intermédiaires également à chaque fois de 5 mm d'épaisseur, comme décrit dans l'exemple 1.

Dans ce cas, on utilise un polymère de butyle, qui se compose de 48% en poids de polyisobutylène, de 22% en poids de noir de fumée et de 30% en poids de Al₂O₃. Ce polymère de butyle présente à 80°C un module d'élasticité transversale de G* = 1,55 MPa. Le module de mémoire à cette température est G' = 1,35 MPa. et le module de perte G" = 0,76 MPa.

Les vitres de protection contre le feu équipées de ces entretoises appliquées par extrusion remplissent également les exigences de la classe de résistance au feu F 90, comme l'ont démontré les essais de combustion correspondants.

## Revendications

1. Composition de mastic à base de butyle, **caractérisée en ce qu'**elle comprend de 40 à 65% en poids de polyisobutylène, de 10 à 25% en poids de noir de fumée et de 10 à 40% en poids d'une charge choisie parmi des substances ne renfermant pas de gaz inclus, la somme de ces pourcentages ne dépassant pas 100%, et **en ce que** la composition est choisie au sein de ce domaine de telle sorte que le polymère de butyle présente à une température de 80°C un module d'élasticité transversale ou de cisaillement G* de 1,2 à 2,2 MPa.

2. Composition de mastic selon la revendication 1, **caractérisée en ce qu'**elle comprend de 50 à 60% en poids de polyisobutylène, de 12 à 18% en poids de noir de fumée et de 25 à 35% en poids de charge et **en ce qu'**elle présente à 80°C un module d'élasticité transversale ou de cisaillement G* de 1,8 MPa.

3. Composition de mastic selon la revendication 1 ou 2, **caractérisée en ce que** la charge est choisie parmi des substances ne renfermant pas d'air inclus.

4. Composition de mastic selon l'une quelconque des revendications précédentes, **caractérisée en ce que** la charge comprend au moins une substance subissant une réaction endothermique lorsqu'elle est portée à une température d'au moins 180°C.

5. Composition de mastic selon l'une quelconque des revendications précédentes, **caractérisée en ce que** la charge comprend au moins un composé renfermant de l'eau d'hydratation ou de cristallisation.

6. Composition de mastic selon l'une quelconque des revendications précédentes, **caractérisée en ce que** la charge comprend au moins une substance inorganique choisie parmi des oxydes, des hydroxydes, des sels de sulfates, sulfites, phosphates, phosphites, hypophosphites, silicates, nitrates, nitrites, carbonates, et leurs mélanges.

7. Composition de mastic selon l'une quelconque des revendications précédentes **caractérisée en ce que** la charge comprend au moins un sel d'acide organique, tel qu'un citrate, tartrate, mésotartrate, glyconate.

8. Application d'une composition de mastic selon l'une quelconque des revendications 1 à 7 à la réalisation d'entretoises ou cadres dans des vitrages multiples ou feuilletés.

9. Utilisation d'une composition de mastic selon l'une quelconque des revendications 1 à 7 pour le scellement, jointoiement ou le montage de plaques et matériaux divers.

10. Vitrage de protection contre le feu fait d'au moins deux vitres reliées ensemble à l'aide d'une entretoise collée aux vitres et d'une couche intermédiaire faite d'une masse de remplissage contenant de l'eau et remplissant l'espace intermédiaire entre les vitres, **caractérisé en ce que** l'entretoise se compose d'un cordon, appliqué par extrusion sur la zone marginale d'une vitre, fait d'un polymère de butyle contenant de 40 à 65% en poids de polyisobutylène, de 10 à 25% en poids de noir de fumée et de 10 à 40% en poids d'une charge choisie parmi des substances ne renfermant pas de gaz inclus, la somme de ces pourcentages ne dépassant pas 100%, et **en ce que** la composition du polymère est choisie au sein de ce domaine de telle sorte que le polymère de butyle présente à une température de 80°C un module d'élasticité transversale ou de cisaillement G* de 1,2 à 2,2 MPa.

11. Vitrage de protection contre le feu selon la revendication 10, **caractérisé en ce que** le polymère de butyle contient de 50 à 60% en poids de polyisobutylène, de 12 à 18% en poids de noir de fumée et de 25 à 35% en poids de charge et présente à 80°C un module d'élasticité transversale ou de cisaillement G* de 1,8 MPa.

12. Vitrage de protection contre le feu selon la revendication 10 ou 11, **caractérisé en ce que** la charge est choisie parmi des substances ne renfermant pas d'air inclus.

13. Vitrage de protection contre le feu selon l'une quelconque des revendications 10 à 12, **caractérisé en ce que** la charge comprend au moins une substance subissant une réaction endothermique lorsqu'elle est portée à une température d'au moins 180°C.

14. Vitrage de protection contre le feu selon l'une quelconque des revendications 10 à 13, **caractérisé en ce que** la charge comprend au moins un composé renfermant de l'eau d'hydratation ou de cristallisation.

15. Vitrage de protection contre le feu selon l'une quelconque des revendications 10 à 14, **caractérisé en ce que** la charge comprend au moins une substance inorganique choisie parmi des oxydes, des hydroxydes, des sels de sulfates, sulfites, phosphates, hydrogénophosphates, phosphites, silicates, nitrates, nitrites, carbonates, et leurs mélanges.

16. Vitrage de protection contre le feu selon la revendication 15, **caractérisé en ce que** la charge inorganique se compose d'une ou de plusieurs des substances CaSO₄, CaCO₃, MgO, MgCO₃, d'un silicate, de Al(OH)₃, de Al₂O₃ ou d'un phosphate d'aluminium.

17. Vitrage de protection contre le feu selon l'une quelconque des revendications 10 à 15, **caractérisé en ce que** la charge comprend au moins un sel d'acide organique, tel qu'un citrate, tartrate, mésotartrate, glyconate.

18. Procédé de préparation d'un vitrage de protection contre le feu se composant d'au moins deux vitres, d'une entretoise en forme de cadre collée avec les deux vitres et d'une couche intermédiaire faite d'une masse de remplissage contenant de l'eau et remplissant l'espace intermédiaire entre les vitres, **caractérisé en ce que** l'enfretoise en forme de cadre, qui est obtenue à partir d'un polymère de butyle contenant de 40 à 65% en poids de polyisobutylène, de 10 à 25% en poids de noir de fumée et de 10 à 40% en poids d'une charge choisie parmi des substances ne renfermant pas de gaz inclus, la somme de ces pourcentages ne dépassant pas 100%, qui a un module d'élasticité transversale ou de cisaillement G* de 1,2 à 2,2 MPa à 80°C, est appliquée par extrusion au voisinage immédiat de la zone marginale de la vitre à l'aide d'une buse d'extrusion calibrée.

## Patentansprüche

1. Klebemasse-Zusammensetzung auf Butyl-Basis, **dadurch gekennzeichnet, dass** sie umfasst 40 bis 65 Gew.-% Polyisobutylen, 10 bis 25 Gew.-% Ruß und 10 bis 40 Gew.-% eines Füllstoffes, der aus Substanzen ohne eingeschlossene Gasanteile ausgewählt ist, wobei die Summe dieser Anteile 100 % nicht überschreitet, und dadurch, dass die Zusammensetzung innerhalb dieser Bereiche so ausgewählt ist, dass das Butyl-Polymer bei einer Temperatur von 80 °C einen Schub- oder Schermodul G* von 1,2 bis 2,2 MPa aufweist.

2. Klebemasse-Zusammensetzung nach Anspruch 1, **dadurch gekennzeichnet, dass** sie umfasst 50 bis 60 Gew.-% Polyisobutylen, 12 bis 18 Gew.-% Ruß und 25 bis 35 Gew.-% eines Füllstoffes, und dadurch, dass sie bei 80 °C einen Schub- oder Schermodul G* von 1,8 MPa aufweist.

3. Klebemasse-Zusammensetzung nach Anspruch 1 oder 2, **dadurch gekennzeichnet, dass** der Füllstoff aus den Substanzen ausgewählt ist, die keine Luft enthalten.

4. Klebemasse-Zusammensetzung nach einem der vorstehenden Ansprüche, **dadurch gekennzeichnet, dass** der Füllstoff mindestens eine Substanz enthält, die eine endotherme Reaktion durchläuft, wenn sie auf eine Temperatur von mindestens 180 °C gebracht wird.

5. Klebemasse-Zusammensetzung nach einem der vorstehenden Ansprüche, **dadurch gekennzeichnet, dass** der Füllstoff mindestens eine Komponente enthält, die Hydratations- oder Kristallwasser enthält.

6. Klebemasse-Zusammensetzung nach einem der vorstehenden Ansprüche, **dadurch gekennzeichnet, dass** der Füllstoff mindestens eine anorganische Substanz enthält, die aus Oxiden, Hydroxiden, Salzen von Sulfaten, Sulfiten, Phosphaten, Hypophosphiten, Silikaten, Nitraten, Carbonaten und deren Mischungen ausgewählt ist.

7. Klebemasse-Zusammensetzung nach einem der vorstehenden Ansprüche, **dadurch gekennzeichnet, dass** der Füllstoff mindestens ein Salz einer organischen Säure, wie ein Citrat, Tartrat, Mesotartrat, Gluconat, enthält.

8. Anwendung einer Klebemasse-Zusammensetzung nach einem der vorstehenden Ansprüche 1 bis 7 zur Herstellung von Abstandhaltern oder Rahmen in Mehrfach- oder Verbundscheiben.

9. Verwendung einer Klebemasse-Zusammensetzung nach einem der vorstehenden Ansprüche 1 bis 7 zum Versiegeln, Abdichten oder Montage von Platten und verschiedenen Materialien.

10. Brandschutzscheibe aus mindestens zwei Scheiben, die miteinander mithilfe eines auf die Scheiben geklebten Abstandhalters verbunden sind, und aus einer Zwischenschicht, die aus einer Wasser enthaltenden und den Zwischenraum zwischen den Scheiben auffüllenden Füllmasse, **dadurch gekennzeichnet, dass** der Abstandhalter aus einem Strang besteht, der durch Extrusion auf den Randbereich einer Scheibe aufgebracht ist, und aus einem Butyl-Polymer mit 40 bis 65 Gew.-% Polyisobutylen, von 10 bis 25 Gew.-% Ruß und von 10 bis 40 Gew.-% eines Füllstoffs besteht, der aus kein Gas enthaltenden Substanzen ausgewählt ist, wobei die Summe dieser Anteile 100 % nicht überschreitet, und dass die Zusammensetzung des Polymers aus diesen Bereichen so ausgewählt ist, dass das Butyl-Polymer bei einer Temperatur von 80 °C einen Schub- oder Schermodul G* von 1,2 bis 2,2 MPa aufweist.

11. Brandschutzscheibe nach Anspruch 10, **dadurch gekennzeichnet, dass** das Butyl-Polymer zwischen 50 und 60 Gew.-% Polyisobutylen, 12 bis 18 Gew.-% Ruß und 25 bis 35 Gew.-% eines Füllstoffs enthält und bei 80 °C einen Schub- oder Schermodul G* von 1,8 MPa aufweist.

12. Brandschutzscheibe nach Anspruch 10 oder 11, **dadurch gekennzeichnet, dass** der Füllstoff aus den Substanzen ausgewählt ist, die keine Luft enthalten.

13. Brandschutzscheibe nach einem der Ansprüche 10 bis 12, **dadurch gekennzeichnet, dass** der Füllstoff mindestens eine Substanz enthält, die eine endotherme Reaktion durchläuft, wenn sie auf eine Temperatur von mindestens 180 °C gebracht wird.

14. Brandschutzscheibe nach einem der vorstehenden Ansprüche 10 bis 13, **dadurch gekennzeichnet, dass** der Füllstoff mindestens eine Komponente enthält, die Hydratations- oder Kristallwasser enthält.

15. Brandschutzscheibe nach einem der vorstehenden Ansprüche 10 bis 14, **dadurch gekennzeichnet, dass** der Füllstoff mindestens eine anorganische Substanz enthält, die aus Oxiden, Hydroxiden, Salzen von Sulfaten, Sulfiten, Phosphaten, Hydrogenphosphiten. Phosphiten, Silikaten, Nitraten, Carbonaten und deren Mischungen ausgewählt ist.

16. Brandschutzscheibe nach Anspruch 15, **dadurch gekennzeichnet, dass** der anorganische Füllstoff sich aus einer oder mehreren Substanzen aus CaSO₄, CaCO₃, MgO, MgCO₃, ein Silikat, Al(OH)₃, Al₂O₃ oder einem Aluminiumphosphat zusammensetzt.

17. Brandschutzscheibe nach einem der Ansprüche 10 bis 15, **dadurch gekennzeichnet, dass** der Füllstoff mindesteris ein Salz einer organischen Säure, wie ein Citrat, Tartrat, Mesotartrat, Gluconat, enthält.

18. Verfahren zum Herstellen einer Brandschutzscheibe, die aus mindestens zwei Scheiben, einem rahmenförmigen, mit den beiden Scheiben verklebten Abstandhalter und einer aus einer wasserhaltigen Füllmasse bestehenden und den Zwischenraum zwischen den Scheiben füllenden Zwischenschicht besteht, **dadurch gekennzeichnet, dass** der rahmenförmige Abstandhalter, der aus einem Butyl-Polymer mit 40 bis 65 Gew.-% Polyisobutylen, von 10 bis 25 Gew.-% Ruß und von 10 bis 40 Gew.-% eines Füllstoffs besteht, der aus kein Gas enthaltenden Substanzen ausgewählt ist, wobei die Summe dieser Anteile 100 % nicht überschreitet, und dass die Zusammensetzung des Polymers aus diesen Bereichen so ausgewählt ist, dass das Butyl-Polymer bei einer Temperatur von 80 °C einen Schub- oder Schermodul G* von 1,2 bis 2,2 MPa aufweist, durch Extrusion in unmittelbarer Nachbarschaft des Randbereichs der Scheibe mithilfe einer kalibrierten Extrusionsdüse aufgebracht wird.

## Claims

1. Putty composition based on butyl, **characterised in that** it comprises 40 to 65% by weight polyisobutylene, 10 to 25% by weight carbon black and 10 to 40% by weight of a filler chosen from amongst substances not containing any included gases, the sum of these percentages not exceeding 100%, and **in that** the composition is chosen within this range so that the butyl polymer has, at a temperature of 80°C, a modulus of transverse elasticity or modulus of elasticity in shear G* of 1.2 to 2.2 MPa.

2. Putty composition according to Claim 1, **characterised in that** it comprises 50 to 60% by weight polyisobutylene, 12 to 18% by weight carbon black and 25 to 35% by weight filler and **in that** it has at 80°C a modulus of transverse elasticity or modulus of elasticity in shear G* of 1.8 MPa.

3. Putty composition according to Claim 1 or 2, **characterised in that** the filler is chosen from amongst substances not containing any included air.

4. Putty composition according to any one of the preceding claims, **characterised in that** the filler comprises at least one substance undergoing an endothermic reaction when it is raised to a temperature of at least 180°C.

5. Putty composition according to any one of the preceding claims, **characterised in that** the filler comprises at least one compound containing hydration or crystallisation water.

6. Putty composition according to any one of the preceding claims, **characterised in that** the filler comprises at least one inorganic substance chosen from amongst oxides, hydroxides, salts of sulphates, sulphites, phosphates, phosphites, hypophosphites, silicates, nitrates, nitrites, carbonates and mixtures thereof.

7. Putty composition according to any one of the preceding claims, **characterised in that** the filler comprises at least one organic acid salt, such as a citrate, tartrate, mesotartrate or glyconate.

8. Application of a putty composition according to any one of Claims 1 to 7 to the production of spacers or frames in multiple or laminated glazing.

9. Use of a putty composition according to any one of Claims 1 to 7 for the fixing, jointing or mounting of sheets and various materials.

10. Fire-protection glazing made from at least two panes connected together by means of a spacer glued to the panes and an intermediate layer made from a filling mass containing water and filling the intermediate space between the panes, **characterised in that** the spacer is composed of a bead, applied by extrusion to the marginal area of a pane, made from a butyl polymer containing 40 to 65% by weight polyisobutylene, 10 to 25% by weight carbon black and 10 to 40% by weight of a filler chosen from amongst substances not containing included gases, the sum of these percentages not exceeding 100%, and **in that** the composition of the polymer is chosen within this range so that the butyl polymer has, at a temperature of 80°C, a modulus of transverse elasticity or modulus of elasticity in shear G* of 1.2 to 2.2 MPa.

11. Fire-protection glazing according to Claim 10, **characterised in that** the butyl polymer contains 50 to 60% by weight polyisobutylene, 12 to 18% by weight carbon black and 25 to 35% by weight filler and has at 80°C a modulus of transverse elasticity or modulus of elasticity in shear G* of 1.8 MPa.

12. Fire-protection glazing according to Claim 10 or 11, **characterised in that** the filler is chosen from amongst substances not containing any included air.

13. Fire-protection glazing according to any one of Claims 10 to 12, **characterised in that** the filler comprises at least one substance undergoing an endothermic reaction when it is raised to a temperature of at least 180°C.

14. Fire-protection glazing according to any one of Claims 10 to 13, **characterised in that** the filler comprises at least one compound containing hydration or crystallisation water.

15. Fire-protection glazing according to any one of Claims 10 to 14, **characterised in that** the filler comprises at least one inorganic substance chosen from amongst oxides, hydroxides, salts of sulphates, sulphites, phosphates, hydrogenophosphates phosphites, silicates, nitrates, nitrites, carbonates and mixtures thereof.

16. Fire-protection glazing according to Claim 15, **characterised in that** the inorganic filler is composed of one or more of the substances CaSO₄, CaCO₃, MgO, MgCO₃, a silicate, Al(OH)₃, Al₂O₃ or an aluminium phosphate.

17. Fire-protection glazing according to any one of Claims 10 to 15, **characterised in that** the filler comprises at least one organic acid salt such as a citrate, tartrate, mesotartrate or glyconate.

18. Method of preparing a fire-protection glazing composed of at least two panes, a spacer in the form of a frame glued with the two panes and an intermediate layer made from a filling mass containing water and filling the intermediate space between the panes, **characterised in that** the spacer in the form of a frame, which is obtained from a butyl polymer containing 40 to 65% by weight polyisobutylene, 10 to 25% by weight carbon black and 10 to 40% by weight of a filler chosen from amongst substances not containing any included gases, the sum of these percentages not exceeding 100%, which has a modulus of transverse elasticity or a modulus of elasticity in shear G* of 1.2 to 2.2 MPa at 80°C, is applied by extrusion in the immediate vicinity of the marginal area of the pane by means of a calibrated extrusion nozzle.
